# FASCICULE DE BREVET EUROPEEN

(11) **EP 1 556 837 B1**
(45) Date de publication et mention de la délivrance du brevet: **09.04.2008**
(21) Numéro de dépôt: 03780247.7
(22) Date de dépôt: 29.10.2003
(51) Int. Cl.: G07D 7/14

(54) **PROCEDE D'AUTHENTIFICATION PAR MARQUAGE OU TRACAGE CHIMIQUE D'UN OBJET OU D'UNE SUBSTANCE**
AUTHENTIFIZIERUNGSVERFAHREN FÜR EINEN GEGENSTAND ODER STOFF DURCH MARKIERUNG ODER CHEMISCHE VERFOLGBARKEIT
METHOD FOR AUTHENTICATION BY CHEMICAL MARKING OR TRACING OF AN OBJECT OR A SUBSTANCE

(30) Priorité: 29.10.2002 FR 0213718
(43) Date de publication de la demande: 27.07.2005
(73) Titulaire: Lambert, Claude, 91240 St-Michel-sur-Orge (FR); Hachin, Jean-Michel, 92300 Levallois Perret (FR)
(72) Inventeur: Lambert, Claude, 91240 St-Michel-sur-Orge (FR); Hachin, Jean-Michel, 92300 Levallois Perret (FR)
(74) Mandataire: de Saint-Palais, Arnaud Marie
(86) Numéro de dépôt international: PCT/FR2003/003233
(87) Numéro de publication internationale: WO 2004/040504

(56) Documents cités:
- EP-A- 1 182 048
- WO-A-97/24699
- FR-A- 2 757 658
- FR-A- 2 822 269
- US-A- 5 592 561

## Description

La présente invention concerne un procédé d'authentification par marquage ou traçage chimique d'objets ou de substances. Elle s'applique plus particulièrement, mais non exclusivement, à la lutte contre la contrefaçon, au tri automatique...

Le document FR 2 757 658 décrit un système d'identification et de suivi de produits selon l'art antérieur.

De façon générale, de nombreux objets ou substances en transit ou proposés à la vente sont identifiés au moyen d'un code à barres. Ce code permet de définir des produits mais il ne suffit pas pour les authentifier, c'est-à-dire certifier après analyse que l'objet ou la substance est bien celui défini par le code à barres.

Pour essayer de résoudre ce problème, des procédés intégrant dans les objets ou substances un marqueur chimique ont été réalisés. Cependant, il est nécessaire de recourir à des laboratoires pour procéder aux analyses et détecter les produits contrefaisants : cette procédure est beaucoup trop longue et fastidieuse.

Quant à la solution qui consisterait à développer un appareil d'analyse spécifique à chaque produit, elle n'est économiquement pas réalisable.

L'objet de l'invention est de résoudre ces inconvénients en proposant de n'utiliser qu'un seul appareil pour une multiplicité de produits.

A cet effet, elle propose un procédé d'authentification d'objets ou de substances différents à identifier, mettant en oeuvre un système informatique couplé à des moyens de spectrophotométrie et comprenant au moins deux phases successives suivantes :
■ Une phase initiale comprenant :
   - le choix d'une pluralité de marqueurs chimiques qui, lorsqu'ils sont excités par un rayonnement lumineux incident, émettent des rayonnements énergétiques dont les spectres de fréquence sont discernables les uns par rapport aux autres et par rapport aux objets et aux substances dans lesquels ils sont destinés à être incorporés,
   - l'attribution puis l'incorporation dans chacun des objets ou substances d'une combinaison de marqueurs précédemment choisis différente de celles attribuées aux autres objets ou substances;
   - l'établissement d'un code d'authentification dudit objet ou de ladite substance déterminé par des paramètres relatifs à la présence ou l'absence des marqueurs dans la combinaison attribuée,
   - le stockage en mémoire d'un système informatique du code d'authentification de tous les objets ou substances et de données annexes correspondant à ces objets ou ces substances,
   - l'affectation à l'objet ou à la substance d'un code d'identification, tel qu'un code à barres ou analogue, ce code d'identification pouvant être associé à l'objet, à la substance, à son contenant, et/ou à son emballage,
   - le stockage en mémoire dans ledit système des codes d'identification de chacun des objets ou substances;
   - l'établissement d'une correspondance entre les codes d'identification et les codes d'authentification.
■ Une phase d'identification et d'authentification par ledit système, cette phase comportant :
   - l'identification théorique de l'objet ou de la substance par lecture du code d'identification associé à l'objet ou à la substance,
   - l'analyse spectrophotométrique d'au moins une partie de l'objet ou de la substance de manière à détecter les susdits paramètres, notamment la présence ou l'absence de marqueurs et la détermination du code d'authentification de l'objet ou de la substance,
   - l'authentification de l'objet ou de la substance dans le cas où e code d'identification théorique correspond au code d'authentification,
   - l'émission d'un signal de validation dans le cas où une correspondance a été détectée ou un signal d'alerte dans le cas où le code d'authentification ne correspond pas avec le code d'identification.

Dans ce procédé, la phase d'analyse spectrophotométrique pourra comporter les étapes suivantes :
- l'irradiation de l'objet ou de la substance marqué à l'aide d'un faisceau lumineux à large spectre de fréquence,
- l'envoi des ondes transmises ou réfléchies par l'objet ou la substance émis par un générateur sur un élément dispersif qui les dévie de manière à obtenir un spectre lumineux de l'intensité lumineuse en différentes zones du spectre correspondant à des plages de longueurs d'ondes différentes,
- la détection de l'intensité lumineuse dans chacune des zones,
- la comparaison de cette intensité avec une ou plusieurs valeurs de seuil spécifiquement attribuées à cette zone et qui sont enregistrées en mémoire au titre des susdits paramètres,
- le résultat de cette comparaison contribuant à la détermination du code d'authentification de l'objet ou de la substance.

Avantageusement, la détermination des zones du spectre à analyser, de même que les différents paramètres affectés à chacune de ces zones, pourront être effectués par le système, à partir des données d'identification. Cette solution permet d'obtenir une meilleure fiabilité des résultats et d'alléger considérablement la puissance des moyens de traitement utilisés.

Les paramètres relatifs à la présence ou l'absence des marqueurs dans la combinaison attribuée et utilisés pour la détermination d'un code d'identification et/ou d'authentification incluent notamment :
- la présence ou non de fluorescence,
- une durée de fluorescence supérieure ou inférieure à au moins une valeur de seuil,
- la présence ou l'absence d'un pic à une longueur d'onde préétablie ainsi, qu'éventuellement, l'amplitude et/ou la largeur de ce pic,
- des hauteurs de pic d'émission correspondant à une concentration de marqueurs supérieure ou inférieure à une ou plusieurs valeurs de seuil prédéfinies.

Pour augmenter le nombre de combinaisons possibles, des concentrations différentes de marqueurs pourront être utilisées pour obtenir des raies d'intensité différente.

Par ailleurs, pour s'affranchir de tous les facteurs optiques susceptibles de perturber la lecture et l'analyse spectrophotométrique subséquente, l'invention propose deux mesures pouvant être utilisées séparément ou en combinaison.

La première mesure consiste à asservir l'intensité lumineuse émise par le générateur de rayonnement lumineux en fonction de l'écart entre la valeur de l'intensité lumineuse détectée dans une plage de fréquence prédéterminée non affectée par la présence des marqueurs et d'une valeur de consigne prédéterminée.

La seconde mesure consiste à incorporer à l'objet et/ou à la substance un ou plusieurs marqueurs étalon grâce auxquels le système informatique peut effectuer des corrections ou un calibrage de manière à pouvoir s'affranchir de bruits pouvant par exemple provenir de la composition de la substance ou de l'objet, des variations de positionnement telles que angle d'incidence et distance à l'objet ou de matière transparente enveloppant cette substance ou cet objet.

Ces deux mesures s'avèrent indispensables lorsque l'on utilise plusieurs niveaux d'intensité en tant que paramètres.

Selon une variante, le marquage chimique pourra se faire par le biais d'une étiquette, d'un insert ou de tout autre support contenant les marqueurs.

Avantageusement, cette étiquette pourra comprendre une zone réfléchissante recouverte d'une couche transparente contenant des marqueurs. Cette solution permet ainsi d'effectuer une spectrophotométrie par réflexion qui réduit considérablement les pertes énergétiques.

Les données d'authentification pourront comporter la combinaison de marqueurs choisis, les longueurs d'onde des raies caractéristiques, leur intensité, la durée d'une fluorescence éventuelle...

Ainsi, il n'est pas nécessaire de couvrir toutes les longueurs d'onde, il suffit d'analyser les plages de valeurs correspondant aux raies attendues qui sont identifiées à partir du code d'identification afin de vérifier leur présence ou leur absence sans se préoccuper des zones situées hors de ces plages.

Pour procéder à l'authentification, l'opérateur conduisant l'analyse n'a pas besoin de connaître l'identité théorique de l'objet ou de la substance car elle est fournie par le code à barres directement au système informatique effectuant la comparaison des données.

Un tel procédé pourra être utilisé dans la lutte contre la contrefaçon mais également être appliqué au tri automatique. Par exemple, dans le cas du recyclage du plastique, on pourra envisager d'utiliser une combinaison de marqueurs par type de plastique ou par grade de plastique, ce qui permet ensuite de les trier par type ou par grade une fois l'authentification réalisée.

Des modes d'exécution de l'invention seront décrits ci-après, à titre d'exemples non limitatifs.
La figure 1 est une représentation schématique d'un dispositif utilisant le procédé selon l'invention, les ondes étant transmises ;
La figure 2 est un schéma fonctionnel du procédé selon l'invention ;
La figure 3 est une représentation schématique d'un dispositif utilisant le procédé selon l'invention, les ondes étant réfléchies ;
La figure 4 est une représentation schématique d'un dispositif utilisant le procédé selon l'invention, les ondes étant réfléchies sur une étiquette.

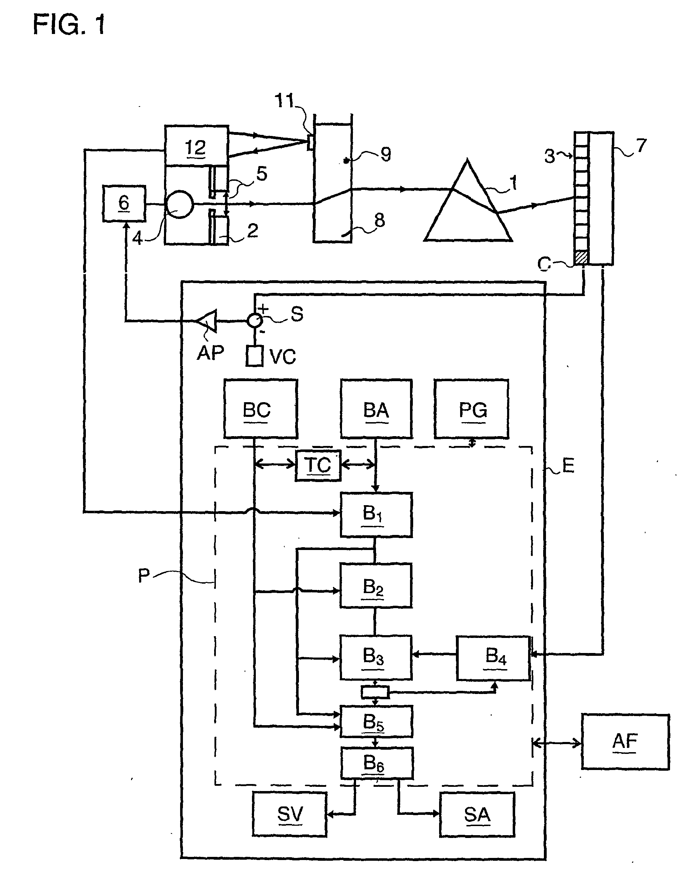

Dans l'exemple de la figure 1, ce sont les ondes transmises à travers une substance contenant une combinaison de marqueurs et plus exactement sur un échantillon éventuellement dilué dans une solution qui sont analysées.

Il est à noter que ce type d'analyse peut également être pratiqué sur des objets dont la matière le permet ou directement sur la substance au travers de son contenant.

Dans cet exemple, le dispositif d'identification et d'authentification mettant en oeuvre le procédé selon l'invention comprend un spectrophotomètre comportant :
- un générateur de rayonnement lumineux à long spectre de fréquence et à intensité réglable faisant intervenir une source lumineuse 4 alimentée par un générateur de courant électrique 6 à puissance réglable ; un collimateur 2 dans l'axe duquel est placé un objectif 5,
- un échantillon de produit 8 contenu dans un récipient 9 transparent situé dans l'axe optique du générateur de lumière,
- un élément dispersif 1 situé dans ledit axe du côté du récipient 9 situé à l'opposé du générateur de lumière ; cet élément dispersif 1 (prisme ou réseau de diffraction) décompose le rayonnement lumineux en fonction de la fréquence pour produire un spectre,
- des moyens de détection du spectre, ici une barrette de détecteurs à transfert de charges DTC 3 qui permet de détecter les radiations émises à différents niveaux spectraux par l'élément dispersif 1 et de transmettre à un système électronique un signal numérique représentatif du spectre détecté.

Comme précédemment mentionné, la source lumineuse 4 est une source à large spectre de fréquence. Elle peut consister en des lampes à arc (type Xénon) ou en une ampoule engendrant une lumière blanche. Eventuellement, elle pourrait consister en une pluralité de sources de rayonnement laser spécifiquement choisies en fonction de la nature des marqueurs chimiques utilisés, un mélangeur étant alors utilisé pour effectuer un mélange des différents rayonnements émis par ces sources.

L'objectif 5 peut, par exemple, consister en un doublet achromatique.

Bien entendu, le générateur de courant électrique 6 pourra également servir à l'alimentation des circuits électroniques associés au spectrophotomètre.

Dans cet exemple, la barrette de détecteurs 3 comprend une cellule C située à une position du spectre non affectée par la présence des marqueurs chimiques.

Cette cellule C émet un signal de détection appliqué (après amplification) à l'entrée d'un soustracteur S dont la deuxième entrée reçoit une tension calibrée VC. La sortie de ce soustracteur S est appliquée à un amplificateur de puissance AP qui pilote le générateur 6 de manière à ce que la sortie du soustracteur S se maintienne à une valeur constante, de préférence égale à zéro.

Grâce à cette disposition, on s'assure que le niveau d'intensité lumineuse reçu par la cellule C est constant. On s'affranchit ainsi des perturbations susceptibles de faire varier l'intensité lumineuse du rayonnement transmis au travers de l'échantillon 8.

Conformément à l'invention, la source lumineuse est associée à un lecteur de code à barres 12 qui émet un rayonnement lumineux (par exemple laser) en direction d'un code à barres 11 porté par le récipient 9. Ce lecteur 12 comprend un récepteur permettant de détecter le rayonnement réfléchi par le code à barres. Un circuit électronique permet de traiter les informations reçues par ce récepteur et d'engendrer un signal numérique représentatif de ce code à barres à destination du système électronique E.

Le système électronique comprend un processeur P (indiqué en traits interrompus) associé à des moyens de mémorisation d'une base de données des codes d'identification BC, d'une base de données des codes d'authentification BA et d'un programme de gestion des différents traitements PG, ainsi qu'à des moyens d'affichage et de signalisation AF.

Ce processeur P est conçu de manière à effectuer une identification théorique (bloc B1) du récipient 9 à partir du signal délivré par le lecteur de code à barres 3, de la base de données des codes d'identification BC. Une fois l'identification théorique effectuée, le processeur P détermine les zones du spectre à explorer (bloc B2). A cet effet, il utilise, outre le code d'identification lu, le code d'authentification correspondant grâce à une table de correspondance TC établie entre les deux bases de données BC, BA. Le processeur P analyse ensuite (bloc B3) les zones précédemment déterminées du spectre au travers du signal fourni par la barrette de détecteurs 3.

Dans le cas où l'on utilise un marqueur étalon, ce signal peut être corrigé (bloc B4) avant analyse à partir du signal numérique produit par le détecteur correspondant à ce marqueur étalon.

Le processeur P détermine ensuite (bloc B5) le code d'authentification détecté qu'il compare (bloc B6) au code d'identification prédéterminé. Dans le cas d'une concordance entre ces deux codes, le processeur émet un signal de validation SV. Dans le cas contraire, le processeur émet un signal d'alarme SA.

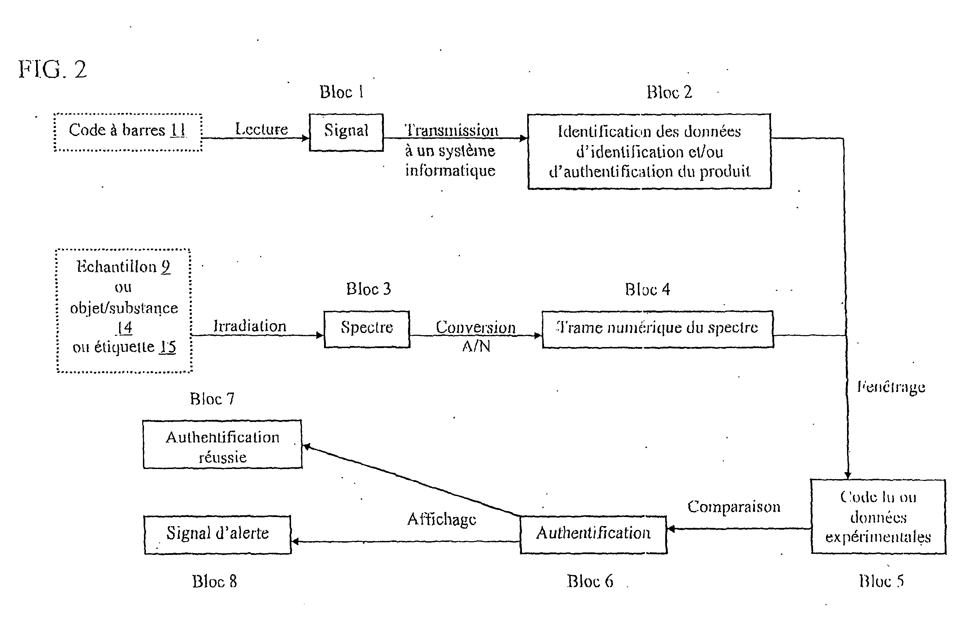

Le procédé selon l'invention utilisé par le dispositif illustré sur la figure 1 comporte les phases suivantes (figure 2) :
■ Une phase initiale comprenant :
   - le choix de marqueurs en fonction de leur adéquation les uns par rapport aux autres et par rapport à la substance,
   - l'introduction de ces marqueurs à des concentrations différentes dans ladite substance,
   - la détermination des codes d'authentification constitués par des chiffres binaires représentatifs de la présence ou de l'absence, voire de la concentration des marqueurs, ces codes étant stockés en mémoire dans le système électronique E,
   - l'attribution à chacun de ces codes d'une substance identifiée par un code à barres 11.
■ Une phase d'identification et/ou d'authentification comprenant :
   - la lecture du code à barres 11 situé sur le contenant de la substance marquée au moyen du lecteur de codes à barres 12 et l'émission d'un signal spécifique contenant un code d'identification de la substance (bloc 1),
   - la transmission dudit signal au système électronique E qui identifie ce code d'identification (bloc 2),
   - l'analyse spectrophotométrique comportant :
      ○ l'irradiation de la substance au moyen de la source de rayons 4,
      ○ la transmission des ondes transmises sur l'élément dispersif 1 qui les dévie différemment en fonction de leur longueur d'onde,
      ○ l'obtention d'un spectre de la radiation transmise grâce aux ondes planes ainsi déviées qui donnent, dans une zone de détection composée de la série de barrettes DTC 3, une succession d'images de la source (bloc 3),
      ○ l'échantillonnage de ce spectre puis la conversion du signal analogique en un signal numérique présentant une trame numérique prédéterminée (bloc 4),
      ○ un fenêtrage effectué en fonction des plages de longueurs d'onde indiquées dans les données d'authentification stockées en mémoire et extraites grâce à l'identification du code à barres, de façon à ne considérer que la présence ou l'absence des raies caractéristiques des marqueurs qui détermine alors un code lu (bloc 5),
      ○ la comparaison des données ou code d'authentification avec les données expérimentales ou code lu de manière à effectuer l'authentification de la substance (bloc 6),
   - l'affichage du résultat de manière visuelle, par exemple sur un écran 13 et/ou de manière auditive :
      o authentification réussie s'il y a coïncidence entre les codes d'authentification et le code lu (bloc 7),
      o signal d'alerte en cas de non authentification s'il y a discordance entre les codes d'authentification et le code lu (bloc 8).

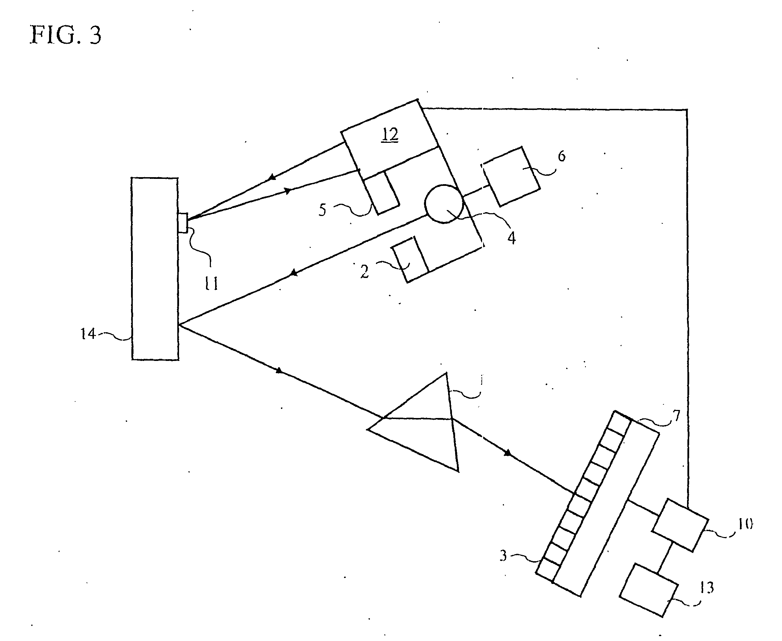

La figure 3 illustre une analyse utilisant des ondes réfléchies sur au moins une partie d'un objet ou d'une substance 14.

Dans ce cas, l'élément dispersif 1 est situé sur l'axe de l'onde réfléchie.

Le procédé est le même que celui décrit ci-dessus pour l'exemple de la figure 1.

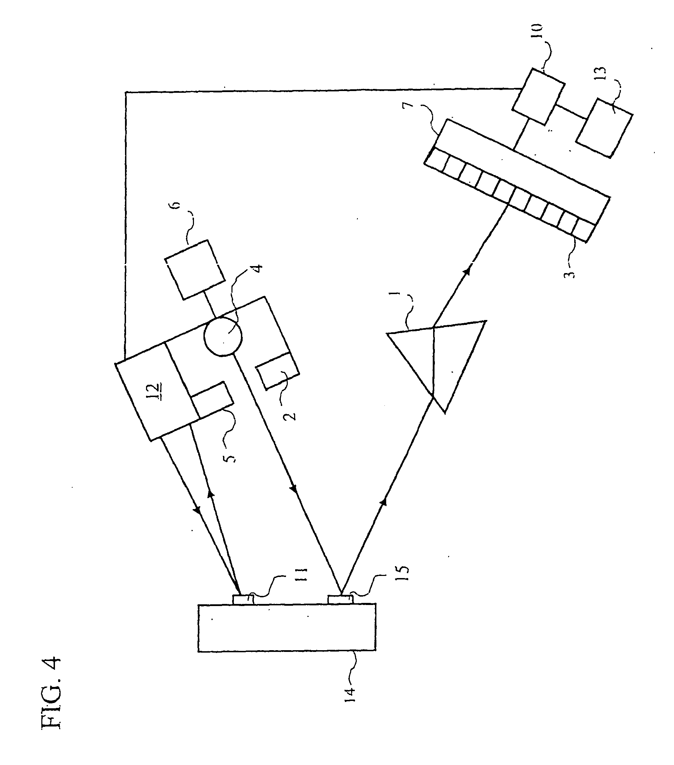

La figure 4 illustre une variante de l'exemple de la figure 3. En effet, les marqueurs ne sont pas directement intégrés à un objet ou à une substance 14 mais appliqués au moyen d'une pellicule, d'un vernis transparent sur une étiquette 15 qui est apposée sur l'objet à marquer.

Le procédé est le même que celui décrit ci-dessus pour l'exemple de la figure 1.

Pour un meilleur résultat d'analyse, l'étiquette pourra être réfléchissante.

De surcroît, l'utilisation d'une étiquette vierge de tout marqueur et éventuellement recouverte d'une pellicule ou d'un vernis utilisé pour appliquer les marqueurs peut permettre, lors du traitement des données, d'éliminer les signaux correspondant et simplifier ainsi l'analyse. En effet, l'étiquette marquée puis l'étiquette vierge sont irradiées, puis, lors du traitement des données, les données du spectre de l'étiquette vierge sont retranchées des données du spectre de l'étiquette marquée.

Dans le cas de marqueurs fluorescents, on peut envisager de procéder à une seconde mesure après un temps δt afin de vérifier la durée de la fluorescence.

Les traceurs utilisés peuvent être organiques ou inorganiques. Ils peuvent être à base de terres rares telles que le dysprosium, l'europium, le samarium, yttrium...

Quelques marqueurs utilisés et leurs caractéristiques sont présentés à titre d'exemple dans le tableau ci-après :
Les compagnies les commercialisant sont notamment BASF, Bayer, Glowburg, Lambert Rivière, Phosphor Technology, Rhodia, SCPI,...

| **Marqueur** | **Longueur d'onde d'excitation λₑₓ + Δλ_{1/2}** | **Longueur d'onde du pic d'émission λₑₘₐₓ + Δλ_{1/2} (nm)** |
|---|---|---|
| A | 300 ± 40 | 480 ± 6 |
| | | 572 ± 6 |
| B | 300 ± 40 | 562 ± 10 |
| | | 601 ± 6 |
| C | 335 ± 35 | 470 ± 85 |
| D | 365 ± 70 | 480 ± 90 |
| E | 350 ± 20 | 612 ± 3 |
| F | 380 ± 45 | 480 ± 75 |
| G | 365 | 610 ± 50 |

Il est à noter que les marqueurs ne se limitent pas à des marqueurs commerciaux, ils peuvent être synthétisés par synthèse totale ou dérivés de marqueurs commerciaux.

## Revendications

1. Procédé pour l'identification et l'authentification d'objets ou de substances différents, ce procédé mettant en oeuvre un système informatique couplé à des moyens de spectrophotométrie,
**caractérisé en ce qu'**il comprend au moins les deux phases successives suivantes :
■ une phase initiale comprenant :
- le choix d'une pluralité de marqueurs chimiques qui, lorsqu'ils sont excités par un rayonnement lumineux incident, émettent des rayonnements énergétiques dont les spectres de fréquence sont discernables les uns par rapport aux autres et par rapport aux objets et aux substances dans lesquels ils sont destinés à être incorporés,
- l'attribution puis l'incorporation dans chacun des objets ou substances d'une combinaison de marqueurs différente de celles attribuées aux autres objets ou substances,
- l'établissement d'un code d'authentification dudit objet ou de ladite substance déterminé par des paramètres comprenant au moins la présence ou l'absence des marqueurs dans la combinaison attribuée,
- le stockage en mémoire d'un système informatique du code d'authentification de tous les objets ou substances et de données annexes correspondant à ces objets ou ces substances,
- l'affectation à l'objet ou à la substance d'un code d'identification, tel qu'un code à barre ou analogue, ce code d'identification pouvant être associé à l'objet, à la substance, à son contenant, et/ou son emballage,
- le stockage en mémoire dans ledit système des codes d'identification de chacun des objets ou substances,
- l'établissement d'une correspondance entre les codes d'identification et les codes d'authentification.
■ une phase d'identification et d'authentification par ledit système, cette phase comportant :
- l'identification théorique de l'objet ou de la substance par lecture du code d'identification associé à l'objet ou à la substance,
- l'analyse spectrophotométrique d'au moins une partie de l'objet ou de la substance de manière à détecter les susdits paramètres, notamment la présence ou l'absence de marqueurs et la détermination du code d'authentification de l'objet ou de la substance
- l'authentification de l'objet ou de la substance dans le cas où le code d'identification théorique correspond au code d'authentification,
- l'émission d'un signal de validation dans le cas où une correspondance a été détectée ou un signal d'alerte dans le cas où le code d'authentification ne correspond pas avec le code d'identification.

2. Procédé selon la revendication 1,
**caractérisé en ce que** ladite analyse spectrophotométrique comporte les étapes suivantes :
- l'irradiation de l'objet ou de la substance marqué par un rayonnement lumineux émis par un générateur (bloc 3),
- l'envoi des ondes transmises ou réfléchies sur un élément dispersif (1) qui les dévie de manière à obtenir un spectre lumineux de l'intensité lumineuse en différentes zones du spectre correspondant à des plages de longueurs d'ondes différentes,
- la détection de l'intensité lumineuse dans ladite zone,
- la comparaison de cette intensité avec une ou plusieurs valeurs de seuil spécifiquement attribuées à cette zone et qui sont enregistrées en mémoire au titre des susdits paramètres,
- le résultat de cette comparaison contribuant à la détermination du code d'authentification de l'objet où de la substance.

3. Procédé selon la revendication 2,
**caractérisé en qu'**il comprend la détermination des susdites zones du spectre à analyser, ainsi que des différents paramètres affectés à chacune de ces zones, à partir des susdits codes d'identification.

4. Procédé selon la revendication 2,
**caractérisé en ce qu'**il comprend l'asservissement de l'intensité lumineuse émise par le générateur de rayonnement lumineux, en fonction de l'écart entre la valeur de l'intensité lumineuse détectée, dans une plage de fréquence prédéterminée non affectée par la présence des marqueurs, et une valeur de consigne prédéterminée.

5. Procédé selon l'une des revendications précédentes,
**caractérisé en ce qu'**il comprend l'incorporation à l'objet et/ou à la substance d'un ou plusieurs marqueurs étalon grâce auxquels le système informatique effectue des corrections et/ou un calibrage, de manière à s'affranchir de bruits pouvant provenir de la composition de la substance ou de l'objet, de variations de positionnement telles que l'angle d'incidence du rayonnement émis par le générateur de rayonnement lumineux et la distance à l'objet.

6. Procédé selon l'une des revendications 2 à 5,
**caractérisé en ce que** le susdit générateur de rayonnement lumineux comprend une source lumineuse à large spectre de fréquence telle qu'une lampe à arc ou une ampoule engendrant une lumière blanche.

7. Procédé selon l'une des revendications 2 à 5,
**caractérisé en ce que** le susdit générateur de rayonnement lumineux comprend une pluralité de sources de rayonnement laser spécifiquement choisies en fonction de la nature des marqueurs chimiques utilisés, et un mélangeur servant à effectuer un mélange des différents rayonnements émis par ces sources.

8. Procédé selon la revendication 2,
**caractérisé en ce que** ledit traitement des données de l'analyse spectrophotométrique comporte les étapes suivantes :
- l'échantillonnage du spectre,
- la conversion du signal analogique en un signal numérique présentant une trame prédéterminée (bloc 4),
- le fenêtrage en fonction des plages de longueurs d'onde indiquées dans les données d'authentification stockées en mémoire et extraites grâce à l'identification du code à barres, de façon à déterminer avec les susdits paramètre un code lu (bloc 5),
- la comparaison des données d'authentification avec les données expérimentales ou code lu (bloc 6),
- l'affichage du résultat de manière visuelle (13) et/ou auditive de manière à indiquer :
o une authentification réussie s'il y a coïncidence entre les codes d'authentification et le code lu (bloc 7),
o une alerte en cas de non authentification s'il y a discordance entre les codes d'authentification et le code lu (bloc 8).

9. Procédé selon la revendication 1,
**caractérisé en ce que** ledit marquage se fait par le biais d'un support contenant les marqueurs, ce support pouvant consister en une étiquette (15) ou en un insert.

10. Procédé selon la revendication 9,
**caractérisé en ce que** le susdit support contenant les marqueurs est réfléchissant.

11. Procédé selon l'une des revendications 9 et 10,
**caractérisé en ce qu'**un support vierge de tout marqueur est ajouté et également irradié puis, lors du traitement des données, les données du spectre du support vierge sont retranchées des données du spectre du support marqué afin d'éliminer les signaux correspondants et simplifier ainsi l'analyse.

12. Procédé selon l'une des revendications précédentes,
**caractérisé en ce que**, lors du traitement des données, les données du spectre de l'objet ou de la substance vierge de marqueurs sont retranchées des données du spectre de l'objet ou de la substance marqué.

13. Procédé selon l'une des revendications précédentes,
**caractérisé en ce que** ladite combinaison de marqueurs comporte au moins un marqueur fluorescent.

14. Procédé selon la revendication 11,
**caractérisée en ce que** lesdits paramètres comprennent en outre la durée de l'émission lumineuse de la substance à identifier à la suite d'une excitation.

15. Procédé selon la revendication 14,
**caractérisé en ce que** lesdits paramètres incluent :
- la présence ou non de fluorescence,
- une durée de fluorescence supérieure ou inférieure à une valeur de seuil,
- la présence ou l'absence d'un pic à une longueur d'onde préétablie et/ou,
- des hauteurs de pic d'émission correspondant à une concentration de marqueurs supérieure ou inférieure à une valeur de seuil prédéfinie.

## Claims

1. Method for identifying and authenticating different objects or substances, this method using a computer system coupled to spectrophotometry means,
**characterized in that** it comprises at least the two following successive phases :
■ an initial phase comprising:
- choosing a plurality of chemical markers which, when excited by an incident light ray, emit energy radiations whose frequency spectra can be distinguished from one another and with respect to objects and substances in which they are intended to be incorporated,
- allocating then incorporating in each of the objects or substances a combination of markers that is different to the combinations allocated to the other objects or substances,
- determining an authentication code for said object or said substance defined using parameters comprising at least the presence or absence of markers in the allocated combination,
- storing in the memory of a computer system the authentication code of all the objects or substances and of related data corresponding to these objects or these substances,
- allocating an identification code to the object or substance, such as a bar code or similar, this identification code possibly being associated with the object, with the substance, with its recipient, and/or its packaging,
- storing, in the memory of said system, the identification codes for each of the objects or substances,
- defining a correspondence between the identification codes and the authentication codes.
■ an identification and authentication phase by said system, this phase comprising:
- theoretical identification of the object or substance by reading the identification code associated with the object or substance,
- spectrophotometric analysis of at least part of the object or substance so as to detect said above parameters, in particular the presence or absence of markers, and determination of the authentication code of the object or substance,
- authentication of the object or of the substance if the theoretical identification code corresponds to the authentication code,
- emission of a validation signal if a correspondence is detected or of an alert signal if the authentication code does not correspond to the identification code.

2. Method as in claim 1,
**characterized in that** said spectrophotometric analysis comprises the following steps:
- irradiating the marked object or substance with a light ray emitted by a generator (block 3),
- sending the transmitted or reflected waves onto a dispersing element (1) which deflects them so as to obtain a light spectrum of the light intensity in different zones of the spectrum corresponding to different wavelength ranges,
- detecting the light intensity in said zone,
- comparing this intensity with one or more threshold values specifically allocated to this zone and which are recorded in memory as being said above parameters,
- the result of this comparison contributing towards determination of the authentication code of the object or of the substance.

3. Method as in claim 2,
**characterized in that** it comprises the determination of said above zones of the spectrum to be analysed, and of the different parameters allocated to each of these zones, using said above identification codes.

4. Method as in claim 2,
**characterized in that** it comprises servo-controlling the light intensity emitted by the light radiation generator in relation to the difference between the value of the detected light intensity, over a predetermined frequency range not affected by the presence of the markers, and a predetermined set value.

5. Method as in any of the preceding claims,
**characterized in that** it comprises the incorporation into the object and/or substance of one or more calibration markers by means of which the computer system conducts corrections and/or calibration so as to overcome noises possibly deriving from the composition of the substance or object, from variations in positioning such as the angle of incidence of the radiation emitted by the light ray generator, and distance to the object.

6. Method as in any of claims 2 to 5,
**characterized in that** said above generator of light radiation comprises a light source with wide frequency spectrum such as an arc lamp or a light bulb generating a white light.

7. Method as in any of claims 2 to 5,
**characterized in that** said generator of light radiation comprises a plurality of laser radiation sources specifically chosen in relation to the type of chemical markers used, and a mixer to mix the different radiations emitted by these sources.

8. Method as in claim 2,
**characterized in that** said processing of data from spectrophotometric analysis comprises the following steps:
- sampling of the spectrum,
- conversion of the analogue signal into a digital signal having a predetermined frame (block 4),
- fenestration in relation to the wavelength ranges indicated in the authentication data stored in memory, and extracted by identifying the bar code, so as to determine a readout code with said above parameters (block 5),
- comparison of authentication data with the experimental data or readout code (block 6),
- displaying of the result (13) visually and/or audibly so as to indicate:
o successful authentication if the authentication codes and the readout code coincide (bloc 7),
o an alert in the event of non-authentication if the authentication codes and the readout code do not tally (block 8).

9. Method as in claim 1,
**characterized in that** said marking is made via a medium containing the markers, this medium possibly being a label (15) or an insert.

10. Method as in claim 9,
**characterized in that** said medium containing the markers is reflective.

11. Method as in either of claims 9 and 10,
**characterized in that** a blank medium free of any marker is added and also irradiated then, during data processing, the spectrum data of the blank medium are subtracted from the spectrum data of the marked medium so as to eliminate corresponding signals and to simplify analysis.

12. Method as in any of the preceding claims,
**characterized in that**, during data processing, the spectrum data of the object or substance free of markers are subtracted from the spectrum data of the marked object or substance.

13. Method as in any of the preceding claims,
**characterized in that** said combination of markers comprises at least one fluorescent marker.

14. Method as in claim 11,
**characterized in that** said parameters also comprise the duration of the light emission of the substance to be identified subsequent to excitation.

15. Method as in claim 14,
**characterized in that** said parameters comprise:
- the presence or absence of fluorescence,
- a fluorescence time greater or less than a threshold value,
- the presence or absence of a peak at a preset wavelength and/or,
- emission peak heights corresponding to a concentration of markers that is greater or less than a predefined threshold value.

## Patentansprüche

1. Verfahren zur Identifizierung und Authentifizierung unterschiedlicher Objekte oder Substanzen, wobei dieses Verfahren ein Datenverarbeitungs-System benutzt, welches an Mittel zur Spektrophotometrie angekoppelt ist,
**dadurch gekennzeichnet, dass** es mindestens die beiden aufeinanderfolgenden nachfolgend beschriebenen Phasen aufweist:
■ Eine Ausgangsphase, welche umfasst:
- Die Auswahl einer Mehrzahl von chemischen Markierungen, welche, wenn sie durch eine einfallende Lichtstrahlung angeregt werden, energetische Strahlungen emittieren, deren Frequenzspektren voneinander und in Bezug auf die Objekte und die Substanzen, in die sie eingebracht werden sollen, unterscheidbar sind;
- die Zuordnung und darauffolgende Einbringung einer Kombination von Markierungen in jedes der Objekte oder jede der Substanzen, die sich von denjenigen unterscheidet, die den anderen Objekten oder Substanzen zugeordnet sind;
- die Erstellung eines Authentifizierungs-Codes des besagten Objekts oder der besagten Substanz, welcher durch Parameter bestimmt ist, die mindestens das Vorhandensein oder das Fehlen von Markierungen in der zugeordneten Kombination umfassen;
- die Speicherung des Authentifizierungs-Codes von allen Objekten oder Substanzen und von hinzugefügten, mit diesen Objekten oder Substanzen korrespondierenden Daten im Speicher eines Datenverarbeitungs-Systems;
- die Zuordnung eines Identifizierungs-Codes, wie beispielsweise eines Strich-Codes oder eines Analog-Codes, zu dem Objekt oder der Substanz, wobei dieser Identifizierungs-Code mit dem Objekt, der Substanz, ihrem Behälter und/oder ihrer Verpackung verbunden sein kann;
- die Speicherung der Identifizierungs-Codes jedes Objekts oder jeder Substanz im Speicher des besagten Systems;
- die Herstellung einer Zuordnung zwischen den Identifizierungs-Codes und den Authentifizierungs-Codes;
■ eine Identifizierungs- und Authentifizierungs-Phase durch das besagte System, wobei diese Phase umfasst:
- Die theoretische Identifizierung des Objekts oder der Substanz durch Auslesen des mit dem Objekt oder der Substanz verknüpften Identifizierungs-Codes;
- die spektrophotometrische Analyse wenigstens eines Teils des Objekts oder der Substanz derart, dass die oben genannten Parameter, insbesondere das Vorhandensein oder das Fehlen von Markierungen, erfasst werden und die Ermittlung des Authentifizierungs-Codes des Objekts oder der Substanz;
- die Authentifizierung des Objekts oder der Substanz in dem Falle, in welchem der theoretische Identifizierungs-Code mit dem Authentifizierungs-Code übereinstimmt;
- die Abgabe eines Freigabe-Signals in dem Falle, in welchem eine Übereinstimmung festgestellt worden ist, oder eines Alarmsignals in dem Falle, in welchem der Authentifizierungs-Code mit dem Identifizierungs-Code nicht übereinstimmt.

2. Verfahren nach Anspruch 1,
**dadurch gekennzeichnet, dass** die besagte spektrophotometrische Analyse die folgenden Schritte umfasst:
- Die Bestrahlung des markierten Objekts oder der markierten Substanz mit einer von einem Erzeuger (Block 3) emittierten Lichtstrahlung;
- die Übertragung der durchgehenden oder reflektierten Wellen auf ein Dispersions-Element (1), welches sie derart ablenkt, dass ein Lichtspektrum erhalten wird, welches in unterschiedlichen Zonen des Spektrums eine Lichtintensität aufweist, die unterschiedlichen Wellenlängenbereichen entspricht;
- die Erfassung der Lichtintensität in der besagten Zone;
- den Vergleich dieser Intensität mit einem oder mehreren Schwellenwerten, welche dieser Zone spezifisch zugeordnet sind, und die im Speicher in Bezug auf die oben genannten Parameter festgehalten sind;
- das Ergebnis dieses Vergleiches, welches zur Bestimmung des Authentifizierungs-Codes des Objekts oder der Substanz beiträgt.

3. Verfahren nach Anspruch 2,
**dadurch gekennzeichnet, dass** es die Bestimmung der oben genannten Zonen des zu analysierenden Spektrums, ebenso wie die der jeder dieser Zonen zugeordneten unterschiedlichen Parameter ausgehend von den oben genannten Identifizierungs-Codes umfasst.

4. Verfahren nach Anspruch 2,
**dadurch gekennzeichnet, dass** es die Regelung der von dem Erzeuger der Lichtstrahlung emittierten Lichtintensität in Abhängigkeit vom Unterschied zwischen dem Wert der in einem vorgegebenen nicht durch das Vorhandensein von Markierungen beeinflussten Frequenzbereich erfassten Lichtintensität und einem vorgegebenen Einstellwert umfasst.

5. Verfahren nach einem der vorhergehenden Ansprüche,
**dadurch gekennzeichnet, dass** es die Einbringung einer oder mehrerer Vergleichs-Markierungen in das Objekt und/oder die Substanz umfasst, mittels derer das Datenverarbeitungs-System Korrekturen und/oder eine Kalibrierung durchführt derart, dass es sich von dem Rauschen freimacht, welches von der Zusammensetzung der Substanz oder des Objekts, von Lageänderungen, wie beispielsweise Änderungen des Einfallswinkels, der vom Erzeuger der Lichtstrahlung emittierten Strahlung und der Entfernung vom Objekt, ausgeht.

6. Verfahren nach einem der Ansprüche 2 bis 5,
**dadurch gekennzeichnet, dass** der oben genannte Erzeuger von Lichtstrahlung eine Lichtquelle mit breitem Frequenzspektrum, wie beispielsweise eine Bogenlampe oder eine Glühlampe, welche weißes Licht erzeugt, umfasst.

7. Verfahren nach einem der Ansprüche 2 bis 5,
**dadurch gekennzeichnet, dass** der oben genannte Erzeuger von Lichtstrahlung mehrere Laser-Strahlungsquellen umfasst, die spezifisch in Abhängigkeit von der Natur der verwendeten chemischen Markierungen ausgewählt sind sowie einen Mischer, der zur Herstellung eines Gemisches aus unterschiedlichen von diesen Quellen emittierten Strahlungen dient.

8. Verfahren nach Anspruch 2,
**dadurch gekennzeichnet, dass** die besagte Verarbeitung der Daten der spektrophotometrischen Analyse die folgenden Schritte umfasst:
- Die Abtastung des Spektrums;
- die Umwandlung des analogen Signals in ein digitales Signal, welches ein vorgegebenes Raster (Block 4) aufweist;
- die Fensterbildung in Abhängigkeit von den Wellenlängenbereichen, die in den Authentifizierungs-Daten dargestellt sind, welche im Speicher gespeichert und dank des Identifizierungs-Strichcodes extrahiert sind, um mittels der oben genannten Parameter einen gelesenen Code zu ermitteln (Block 5);
- den Vergleich der Authentifizierungs-Daten mit den experimentellen Daten oder dem gelesenen Code (Block 6);
- die Anzeige des Ergebnisses visuell (13) und/oder hörbar derart, dass angezeigt wird:
○ Eine gelungene Authentifizierung, wenn eine Koinzidenz zwischen dem Authentifizierungs-Code und dem gelesenen Code vorhanden ist (Block 7),
○ ein Alarm im Falle einer Nicht-Authentifizierung, wenn zwischen dem Authentifizierungs-Code und dem gelesenen Code (Block 8) eine Diskordanz vorhanden ist.

9. Verfahren nach Anspruch 1,
**dadurch gekennzeichnet, dass** die besagte Markierung mittels eines Trägerelements durchgeführt wird, welches Markierungen enthält, wobei dieses Trägerelement aus einem Etikett (15) oder einem Einsatz bestehen kann.

10. Verfahren nach Anspruch 9,
**dadurch gekennzeichnet, dass** das oben genannte Trägerelement, welches die Markierungen enthält, reflektierend ausgebildet ist.

11. Verfahren nach einem der Ansprüche 9 und 10,
**dadurch gekennzeichnet, dass** ein Trägerelement, welches frei von jeder Markierung ist, hinzugefügt wird und dann in der gleichen Weise bestrahlt wird und während der Datenverarbeitung die Daten des Spektrums des unmarkierten Trägerelements von den Daten des Spektrums des markierten Trägerelements abgezogen werden, um übereinstimmende Signale zu eliminieren und somit die Analyse zu vereinfachen.

12. Verfahren nach einem der vorhergehenden Ansprüche,
**dadurch gekennzeichnet, dass** während der Datenverarbeitung die Daten des Spektrums des Objekts oder der Substanz, welche frei von Markierungen sind, von den Daten des Spektrums des markierten Objekts oder der markierten Substanz abgezogen werden.

13. Verfahren nach einem der vorhergehenden Ansprüche,
**dadurch gekennzeichnet, dass** die besagte Kombination von Markierungen mindestens eine fluoreszierende Markierung umfasst.

14. Verfahren nach Anspruch 11,
**dadurch gekennzeichnet, dass** die besagten Parameter weiterhin die Dauer der Lichtaussendung der zu identifizierenden Substanz aufgrund einer Anregung enthalten.

15. Verfahren nach Anspruch 14,
**dadurch gekennzeichnet, dass** die besagten Parameter einschließen:
- Das Vorhandensein oder Fehlen von Fluoreszenz;
- eine Dauer der Fluoreszenz oberhalb oder unterhalb eines Schwellenwertes;
- das Vorhandensein oder Fehlen eines Peaks mit einer vorgegebenen Wellenlänge und/oder
- Peakhöhen der Emission, die mit einer Konzentration von Markierungen oberhalb oder unterhalb eines vorgegebenen Schwellenwertes korrespondieren.
